# DEMANDE DE BREVET EUROPEEN

(11) **EP 4 663 904 A1**
(43) Date de publication de la demande: **17.12.2025**
(21) Numéro de dépôt: 24315288.1
(22) Date de dépôt: 13.06.2024
(51) Int. Cl.: F01K 7/32, F01K 25/10, F02C 1/10

(54) **DISPOSITIF DE GÉNÉRATION D'ÉLECTRICITÉ ET DE CHALEUR AVEC UN CIRCUIT DE FLUIDE AU DIOXYDE DE CARBONE SUPERCRITIQUE**

(71) Demandeur: Naarea, 92000 Nanterre (FR)
(72) Inventeur: Levisse, Paul, 75012 Paris (FR); Ferrero, Lucile, 75014 Paris (FR); Santimaria, Julien, 92400 Courbevoie (FR)
(74) Mandataire: Yes My Patent

(57) **Abrégé**

Dispositif cogénérateur (100) pour convertir une énergie thermique source en électricité et en chaleur, le dispositif comprenant un circuit en boucle fermée de fluide de travail à base de dioxyde de carbone,
- le système comprenant un échangeur de source chaude (1) par exemple issue d'un réacteur nucléaire, une turbine (2), un compresseur principal (3), un compresseur auxiliaire (4), un premier échangeur régénérateur (5), un deuxième échangeur régénérateur (6), et un ensemble échangeur basse température (7,71,72) couplé thermiquement à un circuit d'eau, le circuit en boucle fermée (CFCO₂) comprenant une portion descendante, une portion montante, et une branche de dérivation (BD), le circuit en boucle fermée de fluide de travail se trouvant dans des conditions supercritiques du dioxyde de carbone, sur l'ensemble du circuit en boucle fermée, et la température (T4) prévalant à l'entrée de l'ensemble échangeur basse température (7) étant au moins égale à 90°C.

## Description

La présente invention se rapporte à un dispositif de génération d'électricité et de chaleur avec un circuit de fluide à base de dioxyde de carbone supercritique.

La présente invention vise aussi une installation énergétique utilisant un tel dispositif.

On s'intéresse ici aux installations énergétiques de type centrale de production d'électricité. Par exemple, il peut s'agir d'une centrale nucléaire utilisant un réacteur à fission nucléaire et un ensemble turbogénérateur avec une ou plusieurs turbines et une ou plusieurs génératrices électriques, les turbines étant mises en mouvement par un flux de vapeur d'eau qui est ensuite refroidi depuis une source froide externe, typiquement un fleuve ou la mer. L'ensemble turbogénérateur est aussi appelé dans le métier 'turbo-alternateur'.

Dans l'art connu, les centrales de production d'électricité ont un rendement inférieur à 50% et la chaleur fatale n'est pas exploitée, elle est rejetée dans l'environnement.

Le principe de valoriser la partie de l'énergie qui n'est pas convertie en électricité, sous forme d'apport calorique vers un système externe client est connu sous le nom de cogénération. Il s'avère néanmoins que les circuits de fluides de travail utilisés jusqu'ici ne permettent pas de valoriser efficacement l'ensemble de la fraction énergétique non convertie en électricité.

Il demeure donc un besoin de mieux valoriser la fraction énergétique non convertie en électricité.

C'est dans ce contexte que les inventeurs en sont venus à proposer la solution particulièrement avantageuse exposée ci après.

A cet effet, il est proposé un dispositif cogénérateur pour convertir une énergie thermique source en électricité et en chaleur, le dispositif comprenant :
- un circuit en boucle fermée de fluide de travail à base de dioxyde de carbone,
- le système comprenant un échangeur de source chaude (1), par exemple issue d'un réacteur nucléaire, une turbine (2), un compresseur principal (3), un compresseur auxiliaire appelé recompresseur (4), un premier échangeur régénérateur (5), un deuxième échangeur régénérateur (6), et un ensemble échangeur basse température (7) couplé thermiquement à un circuit d'eau,
- le circuit en boucle fermée (CFCO₂) comprenant une portion descendante, une portion montante, et une branche de dérivation,
- la portion descendante partant de l'échangeur de source chaude et passant successivement par la turbine, le premier échangeur régénérateur, le deuxième échangeur régénérateur, puis par l'ensemble échangeur basse température,
- la portion montante passant par le compresseur principal et passant successivement dans le deuxième échangeur régénérateur, le premier échangeur régénérateur, et entrant dans l'échangeur de source chaude,
- la branche de dérivation partant de l'entrée du recompresseur et rejoignant ensuite un point intermédiaire de la portion montante entre le deuxième et le premier échangeur régénérateur,

caractérisé en ce que le circuit en boucle fermée de fluide de travail se trouve dans des conditions supercritiques du dioxyde de carbone, partout sur l'ensemble du circuit en boucle fermée,
et la température (T4) prévalant à l'entrée de l'ensemble échangeur basse température est au moins égale à 90°C.

Avantageusement, l'ensemble échangeur basse température peut ainsi délivrer un flux énergétique à une température intéressante pour un équipement client. En effet, les températures plus basses présentent un intérêt moindre pour un équipement client.

Grâce à ces dispositions, la chaleur fatale devient valorisable.

De plus, l'utilisation du CO2 supercritique utilise des organes (turbine, compresseur et échangeurs) de taille limitée, des organes étant beaucoup plus compacts que dans les équivalents avec d'autres fluides de travail pour des puissances similaires. Le dispositif proposé est donc de taille réduite.

Il faut remarquer que l'ensemble échangeur basse température peut prendre plusieurs formes comme il sera vu plus loin.

Il faut comprendre que la locution « la branche de dérivation part de l'entrée du recompresseur » signifie que la branche de dérivation prélève une partie du flux qui traverse l'ensemble échangeur basse température pour le diriger dans le recompresseur.

Ce prélèvement de flux peut partir de l'amont de l'échangeur basse température lorsque celui-ci est simple, et peut partir d'un point intermédiaire de l'échangeur basse température lorsque celui-ci est un ensemble comprenant deux échangeurs basse température en série.

Concernant la proportion de fluide qui passe dans la branche de dérivation, selon une réalisation de référence, ce sont les réglages respectifs des vannes de calage des compresseurs qui déterminent la portion de flux qui est dirigée vers le compresseur principal et la portion de flux fluide de travail qui est dirigée vers le recompresseur. Autrement dit, la répartition est faite par l'équilibre entre les compresseurs.

Selon une réalisation alternative, il peut être prévu une première vanne trois voies pour distribuer le fluide de travail, de façon pilotée à cet endroit, avec une portion dirigée vers la branche de dérivation et le restant dirigé vers le compresseur principal.

Selon une réalisation, la température (T4) prévalant à l'entrée de l'ensemble échangeur basse température (7) est au moins égale à 100°C, de préférence voisine de 105°C.

Le flux énergétique délivré à un équipement un client peut être utilisé pour de multiples usages intéressants pour des équipements clients variés, et permet aussi de générer de la vapeur d'eau si besoin. La valorisation économique de la chaleur fatale est ainsi plus élevée.

Selon une réalisation, la pression en entrée du compresseur principal est comprise entre 78 bar et 84 bar.

Le fluide de travail reste ainsi au dessus de 74 bar qui est la pression critique de CO2.

Selon une réalisation particulière, la température prévalant à l'entrée du compresseur est comprise entre 32 °C et 42°C.

Le fluide de travail reste ainsi au dessus de 31 °C qui est la température critique (304 °K).

Selon une réalisation, l'échangeur basse température (7) est formé par un premier échangeur basse température (71) et un deuxième échangeur basse température (72) agencés en série, la branche de dérivation étant configurée pour prélever du fluide de travail en aval du premier et en amont du deuxième pour diriger ce flux vers le recompresseur (4).

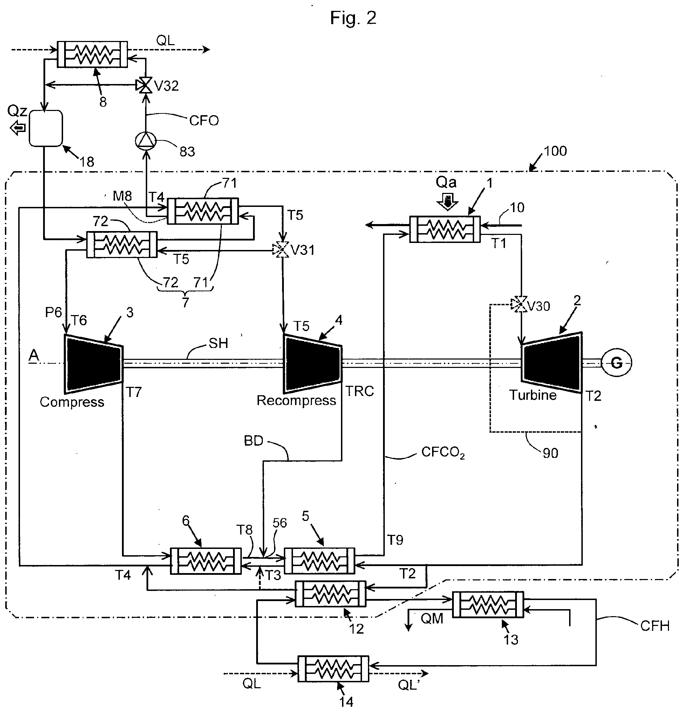

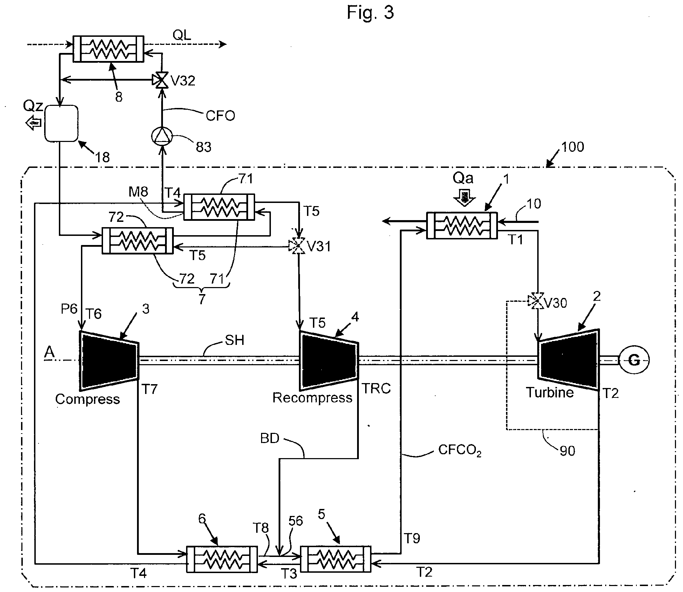

On remarque que la portion du flux de fluide de travail qui ne passe pas dans le deuxième échangeur basse température est dirigée vers le recompresseur par la branche de dérivation. Il peut être prévu à cet endroit une vanne 3 voies déjà mentionnée plus haut (vanne V31 aux figures 2 et 3).

L'agencement en deux échangeurs distincts en série permet de spécialiser un des échangeurs afin de prendre en compte une différence importante de chaleur spécifique entre l'eau et le dioxyde de carbone dans la zone de température entre 35°C et 40°C.

Selon une réalisation, le flux de fluide de travail F72CO₂ passant dans le deuxième échangeur basse température (72) est apte à équilibrer en moyenne sur le deuxième échangeur basse température les valeurs : F72CO₂ * Cp (CO₂) et F7H₂O * Cp (H₂O), où
F72CO₂ est flux de fluide de travail qui passe dans le deuxième échangeur basse température,
F7H₂O est flux d'eau du circuit d'eau qui passe dans le deuxième échangeur basse température,
Cp (CO₂) est la capacité calorifique moyenne du CO₂ entre 35°C et 40°C,
Cp (H₂O) est la capacité calorifique moyenne de l'eau entre 30°C et 50°C.

La capacité de transfert thermique entre le CO₂ et l'eau est ainsi optimisée à l'intérieur de ce deuxième échangeur basse température où la capacité calorifique du CO₂ présente des valeurs beaucoup plus importantes que dans le premier échangeur basse température.

D'un autre point de vue, le dimensionnement du deuxième échangeur basse température et du flux de fluide de travail qui y passe permet d'obtenir un pincement optimisé de cet échangeur thermique. Cela permet aussi d'optimiser le pincement du premier échangeur basse température.

Selon une réalisation, le dispositif peut comprendre en outre un premier échangeur de dérivation (12) agencé en parallèle d'au moins un des échangeurs régénérateurs.

Selon une option de réalisation, le premier échangeur de dérivation peut être agencé en parallèle du premier régénérateur. Selon une autre option de réalisation, le premier échangeur de dérivation peut être agencé en parallèle des deux régénérateurs en série. Comme il sera vu plus loin, ce premier échangeur de dérivation permet de livrer un flux thermique de type moyenne température.

Avantageusement, il est prévu une vanne 3 voies (vanne V33) pour doser le débit du fluide de travail qui passe dans ce premier échangeur de dérivation au lieu de passer dans le premier échangeur régénérateur.

Selon une réalisation, le dispositif peut comprendre en outre un deuxième échangeur de dérivation (19) agencé en parallèle de la turbine ou sur une branche de prélèvement en aval de la turbine.

Avantageusement, il est prévu une autre vanne 3 voies (vanne V34) pour piloter/doser le débit du fluide de travail qui passe dans ce deuxième échangeur de dérivation. Comme il sera vu plus loin, ce deuxième échangeur de dérivation permet de livrer un flux thermique de type haute température.

Selon une réalisation, il est prévu une branche de bypass, qui permet à une portion du flux de fluide de travail de bypasser la turbine.

On peut ainsi avantageusement piloter la vitesse de rotation de l'arbre qui entraîne les génératrices électriques, pour la régulation en fréquence et en tension. Il est prévu une vanne de bypass (V30) pilotable à cet effet.

Selon une réalisation, le dispositif comprend en outre au moins une génératrice électrique (G).

Comme connu en soi, le dispositif de cogénération permet de produire de l'électricité.

Selon une réalisation, le compresseur principal et le recompresseur sont montés à rotation sur un arbre commun (SH), et tournent à la même vitesse de rotation. Ceci constitue une solution simple et efficace, facile à assembler et à maintenir.

En alternative, il peut être prévu des engrenages de liaison pour adapter les régimes de rotation. En outre, il peut être prévu que le ou les compresseur(s) soi(en)t entrainé(s) par moteur électrique.

La présente invention vise aussi une installation énergétique comprenant un dispositif cogénérateur (100) tel que décrit précédemment et comprenant en outre un circuit d'eau (CFO) couplé à l'ensemble échangeur basse température, et un premier échangeur auxiliaire (8) de délivrance d'énergie thermique (QL) à une température comprise entre 80°C et 100°C.

L'échangeur auxiliaire prévu sur le circuit d'eau permet une livraison de flux thermique de base vers un équipement client.

Il faut noter que le fluide de travail apte à délivrer le flux thermique de base, en interface à l'ensemble échangeur basse température, pourrait utiliser un autre fluide que l'eau, notamment de l'eau fortement glycolée ou de l'huile.

Selon une réalisation, le circuit d'eau comprend un ou plusieurs refroidisseurs terminaux (18).

Les refroidisseurs terminaux forment une sécurité de refroidissement de l'installation, notamment en cas d'interruption soudaine de prélèvement par les équipements clients.

Il est prévu de piloter une vanne 3 voies (vanne V32) en fonction du besoin client en chaleur basse température (QL), le restant du flux d'eau dans le circuit d'eau étant refroidi par les refroidisseurs terminaux.

Selon une réalisation, l'installation peut comprendre en outre un circuit d'huile (CFH) couplé au premier échangeur de dérivation (12), et un deuxième échangeur auxiliaire (13) de délivrance d'énergie thermique (QM) à une température comprise entre 125°C et 400°C.

Le deuxième échangeur auxiliaire, prévu sur le circuit d'huile, permet une livraison de flux thermique à moyenne température vers un équipement client.

Selon une réalisation, l'installation peut comprendre en outre un réacteur nucléaire (120) délivrant un flux thermique sur l'échangeur de source chaude (1).

En alternative à un réacteur nucléaire, l'installation peut comprendre une centrale à combustible plus conventionnel, fossile ou non, e.g. charbon ou fioul.

On remarque que les différents échangeurs de dérivation et de livraison sur les circuits d'eau et d'huile permettent d'alimenter en chaleur un ou plusieurs équipements clients.

Selon un aspect avantageux, si QL, QM et QH sont les livraisons de flux thermiques vers les équipements clients, respectivement à basse, moyenne et haute température, on peut obtenir un rendement global : (Welec + QL + QM + QH) / Qa supérieur à 97% où Welec est la puissance électrique délivrée par les génératrices et Qa le flux thermique entrant sur l'échangeur de source chaude.

La présente invention vise aussi un procédé pour piloter une installation énergétique telle que décrite précédemment, apte à délivrer des flux caloriques à basse, moyenne et optionnellement haute température à un ou plusieurs équipements clients, caractérisé en ce que les conditions de pression et température en entrée du compresseur principal sont pilotées, grâce au moins à un pilotage des vannes de calage dans le compresseur et optionnellement le recompresseur, de manière que la pression en entrée du compresseur principal est comprise entre 78 bars et 82 bars, et que la température prévalant à l'entrée du compresseur est comprise entre 32 °C et 42°C.

Les vannes de calages du compresseur et du recompresseur permettent de fixer la pression en sortie des compresseurs. La température en sortie des compresseurs dépend de leurs rendements.

La pression et la température en entrée du compresseur principal sont pilotées grâce au débit dans le circuit d'eau et grâce à un contrôle du volume total de fluide de travail dans le circuit (il y a un réservoir de stockage du CO2 qui permet d'ajouter ou de retirer du CO2 au circuit comme il sera vu plus loin).

Ceci permet d'assurer que le dioxyde de carbone reste dans les conditions supercritiques sur l'ensemble du cycle de fluide de travail. De plus, le choix de ces points de consigne, à proximité du point critique du CO₂, permet d'optimiser à la fois le rendement de génération électrique et l'efficacité de récupération de chaleur fatale.

Selon une réalisation, on pilote le compresseur principal (3) avec comme cible de points de température et de pression T6, P6 la courbe telle que T6 = 272 + P6 x 0,000004. La pression P6 est exprimée en pascals.

On obtient ainsi un rendement global optimum, malgré une faible dégradation du rendement de production électrique, tout en garantissant une livraison à quelques 100°C du flux thermique de base de chaleur fatale.

L'invention sera davantage détaillée par la description de modes de réalisation non limitatifs, et sur la base des figures annexées illustrant des variantes de l'invention.
La figure 1 montre un schéma de principe général d'un circuit en boucle fermée de fluide de travail à base de dioxyde de carbone dans lequel la présente invention peut être mise en oeuvre.
La figure 2 illustre une variante du circuit de la figure 1, sans livraison de chaleur haute température.
La figure 3 illustre une autre variante du circuit de la figure 1, sans livraison de chaleur moyenne température ni livraison de chaleur haute température.
La figure 4 illustre une autre variante du circuit en référence à la figure 3 avec un échangeur basse température simplifié, et illustre un exemple de circuit auxiliaire de remplissage du circuit principal de CO₂
La figure 5 illustre un exemple de cycle de travail dans un diagramme entropique, avec la température en ordonnée et l'entropie en abscisse.
La figure 6 illustre schématiquement un schéma d'un exemple d'installation nucléaire avec le dispositif de cogénération proposé.
La figure 7 illustre les variations de la capacité calorifique du dioxyde de carbone.
La figure 8 illustre les conditions cibles de pression et température à l'entrée du compresseur principal.

Sur les différentes figures, les mêmes références désignent des éléments identiques ou similaires. Pour des raisons de clarté de l'exposé, certains éléments ne sont pas nécessairement représentés à l'échelle.

En référence aux figures, on s'intéresse à un circuit en boucle fermée de fluide de travail à base de dioxyde de carbone, utilisé dans le contexte d'une installation de cogénération.

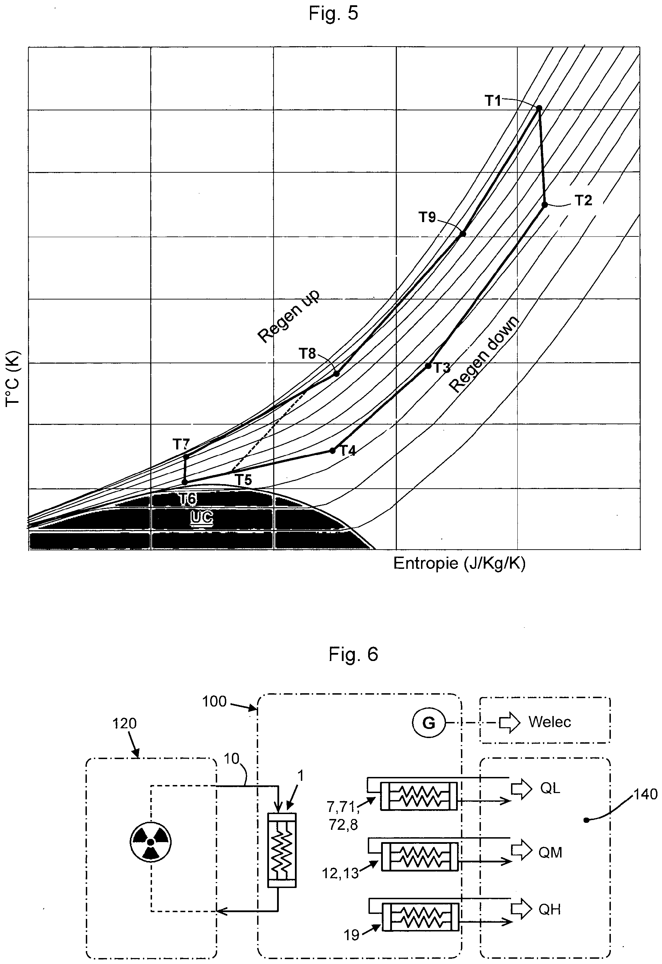

Un exemple d'installation de cogénération est illustré à la figure 6, dans lequel on a présenté à gauche un réacteur nucléaire **120** qui délivre des calories via son circuit secondaire dans un échangeur repéré **1** et qui sera appelé dans la suite échangeur de source chaude **1.** Ce genre d'installation n'est pas émettrice de gaz à effet de serre et contribue à l'effort de décarbonation générale des activités humaines.

Le circuit en boucle fermée au CO₂ fait partie d'un dispositif cogénérateur **100** pour convertir une énergie thermique source en électricité et en chaleur.

Tout d'abord la conversion en énergie électrique se fait au moyen d'une machine génératrice électrique repérée **G**, ladite génératrice étant entraînée via un arbre mécanique **SH** par une turbine **2** recevant le fluide de travail depuis l'échangeur de source chaude **1.** La partie de l'installation concernant la génération électrique n'est pas décrite ici en détail, elle est supposée connue en soi. Il faut toutefois noter que le rendement global des centrales électriques qui ne sont pas dotés de fonction de cogénération n'atteint pas 50 % et souvent dans la pratique le rendement est en dessous de la barre des 45%. On note **Welec** la puissance électrique délivrée par la génératrice ou les génératrices impliquées.

Avantageusement selon la présente invention, on optimise la fonction de cogénération. Notamment en particulier, on s'attache à valoriser ce qui est appelé dans le jargon la « chaleur fatale ».

Ainsi on va livrer une puissance thermique **QL** dite à basse température vers un équipement client.

Par ailleurs, suivant des caractéristiques optionnelles de l'installation, il peut être prévu de livrer également une puissance thermique à moyenne température notée **QM** et une puissance thermique à haute température **QH.**

Les équipements clients destinés à recevoir ces flux thermiques sont collectivement repérés **140** (cf figure 6).

D'une façon générale, on peut lister parmi les équipements clients destinés à recevoir un flux thermique basse température : usine de dessalement de l'eau, chauffage résidentiel et chauffage de surfaces de bureaux tertiaires, industrie textile, industrie agroalimentaire, et généralement toute industrie de transformation.

D'une façon générale, on peut lister parmi les équipements clients destinés à recevoir un flux thermique moyenne température : chimie, pétrochimie, agroalimentaire, automobile, papier.

D'une façon générale, on peut lister parmi les équipements clients destinés à recevoir un flux thermique haute température : Électrolyse de l'eau, industrie sidérurgique, désulfuration, vaporeformage, gazéification du charbon et généralement production d'hydrogène.

Bien entendu, les listes précédemment citées ne sont pas exhaustives.

Le circuit en boucle fermée de fluide de travail est à base de dioxyde de carbone (CO₂). Dans un exemple de réalisation, le fluide de travail est du dioxyde de carbone à 100%. Dans une variante de réalisation, on peut choisir comme flux de de travail une composition gazeuse comprenant du CO2 et au moins un autre gaz.

Le système comprend l'échangeur de source chaude **1** déjà mentionné plus haut, une turbine **2,** un compresseur principal **3,** un compresseur auxiliaire **4,** un premier échangeur régénérateur **5,** un deuxième échangeur régénérateur **6,** et un ensemble échangeur basse température couplé thermiquement à un circuit d'eau.

Le compresseur auxiliaire 4 appelé recompresseur **4.**

Dans l'exemple illustré aux figures, le compresseur principal et le recompresseur sont montés à rotation sur un arbre commun noté **SH,** et tournent à la même vitesse de rotation. Toutefois, il peut en être autrement : il peut être prévu des engrenages de liaison pour adapter les régimes de rotation. En outre, il peut être aussi prévu une configuration où un compresseur ou même les deux compresseurs sont entraînés par un moteur électrique.

Le circuit en boucle fermée (repéré CFCO₂) comprend une portion descendante, une portion montante, et une branche de dérivation BD.

La portion descendante part de l'échangeur de source chaude 1 et passe successivement par la turbine **2,** le premier échangeur régénérateur **5,** le deuxième échangeur régénérateur **6** puis par l'ensemble échangeur basse température **7.**

La portion montante passe par le compresseur principal et passe successivement dans le deuxième échangeur régénérateur **6** le premier échangeur régénérateur 5, et entre dans l'échangeur de source chaude **1.**

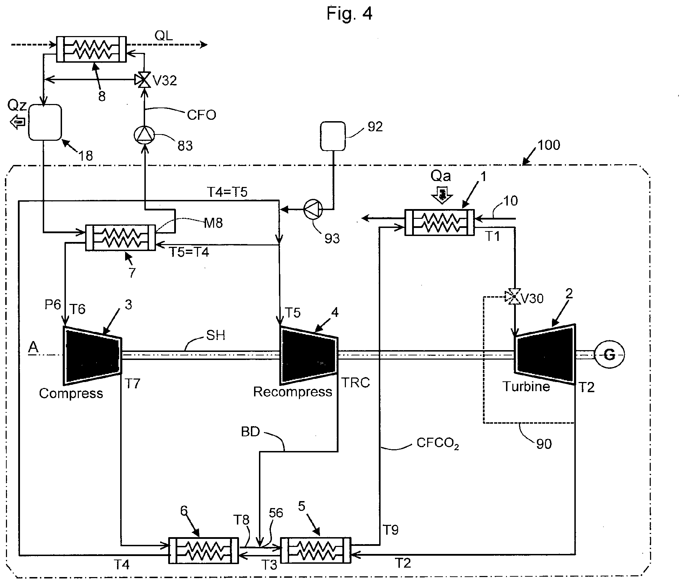

L'ensemble échangeur basse température **7** peut prendre plusieurs formes. A la figure 4, l'ensemble échangeur basse température **7** est formé par un seul échangeur, i.e. un échangeur unique, pour interfacer le circuit d'eau.

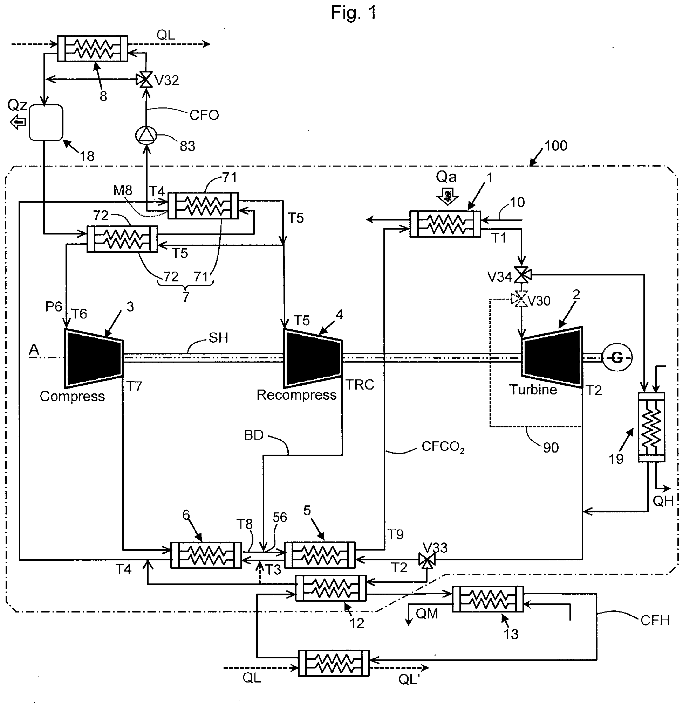

Aux figures 1 à 3, l'échangeur basse température **7** est formé par un premier échangeur basse température **71** et un deuxième échangeur basse température **72** agencés en série.

La branche de dérivation **BD** part de l'amont de l'échangeur basse température ou plus généralement à l'endroit de l'ensemble échangeur basse température **7.** La branche de dérivation passe par le recompresseur et rejoint ensuite un point intermédiaire **56** de la portion montante entre le deuxième et le premier échangeur régénérateur.

La détermination des proportions de flux respectives, qui passent dans la branche du compresseur principal et dans la branche de dérivation, dépend soit du pilotage d'une première vanne trois voies **V31** quand elle présente, soit lorsque le circuit est dépourvu d'une telle vanne 3 voies, la détermination des proportions en question résulte de manière indirecte par des réglages des vannes de calage des compresseur 3 et recompresseur 4.

Le pilotage des conditions de la boucle fermée est aussi rendu dépendant d'une éventuelle ouverture pilotée de la vanne **V30** de bypass de la turbine sur le circuit bypass 90.

En référence à la figure 5, et aux figures 1 à 4, les températures du fluide de travail selon les différents endroits dans le cycle de travail sont représentées.

A la sortie de l'échangeur de source chaude 1, le fluide de travail est à une température **T1.** T1 peut être comprise typiquement entre 600°C et 900°C, de préférence entre 650°C et 800°C.

A la sortie de la turbine 2, après une détente quasi isentropique, le fluide de travail est à une température **T2.**

Le long de son passage à travers le premier régénérateur 5, le fluide de travail baisse en température, de **T2** à **T3** et cède au passage des calories au matériau interne du régénérateur **5.**

Le long de son passage à travers le deuxième régénérateur 6, le fluide de travail baisse en température, de **T3** à **T4** et cède au passage des calories au matériau interne du régénérateur **6.**

Le long de son passage à travers l'ensemble échangeur basse température, simple ou double, la température du fluide de travail baisse de **T4** à T6 et cède au passage des calories au circuit d'eau **CFO.**

Depuis la température **T1** jusqu'à la température **T6,** il s'agit d'une branche du circuit en boucle appelé branche 'descendante' ou 'portion descendante'.

Concernant la portion montante du circuit CFCO2, à la sortie du compresseur **3,** le fluide de travail est à la température **T7.**

Le long de son passage montant à travers le deuxième régénérateur 6, le fluide de travail récupère des calories depuis le matériau interne du régénérateur et la température augmente, de **T7** à **T8.**

Le long de son passage montant à travers le premier régénérateur 5, le fluide de travail récupère des calories depuis le matériau interne du régénérateur et la température augmente, de **T8** à **T9.**

Dans l'échangeur de source chaude **1,** un fluide caloporteur externe **10** chauffe le fluide de travail et le fait passer de la température **T9** à la température **T1.** Le fluide caloporteur externe **10** est à une température élevée, typiquement entre 600°C et 900°C. La puissance calorique apportée par fluide caloporteur externe **10** est notée **Qa.**

Concernant la branche de dérivation, la température à la sortie du recompresseur est notée **TRC.** On remarque que la température **TRC** est voisine de la température **T8.**

En outre il est prévu dans le circuit un réservoir de stockage **92** pour stocker du CO₂ en réserve qui permet d'ajouter du CO₂ au circuit en boucle fermée au moyen d'une pompe d'injection d'appoint notée **93** (cf figure 4).

Il peut être aussi prévu un organe de fuite sélective contrôlée, non représenté aux figures, pour retirer du CO₂ du circuit en boucle fermée.

Le dispositif de cogénération **100** est pilotée de manière à conserver les conditions supercritiques dans l'ensemble du circuit de CO₂.

Le point de pilotage concerne en particulier la pression **P6** et la température **T6** qui règnent à l'endroit de l'entrée du compresseur **3.**

Le pilotage est tel que la température à l'entrée du compresseur est comprise entre 32 °C et 42°C, de préférence entre 32 °C et 37°C. Le pilotage est tel que la pression à l'entrée du compresseur est comprise entre 78 bar et 84 bar.

Le fluide de travail reste ainsi au dessus de 31°C qui est la température critique de CO₂, et au dessus de 74 bar qui est la pression critique de CO₂.

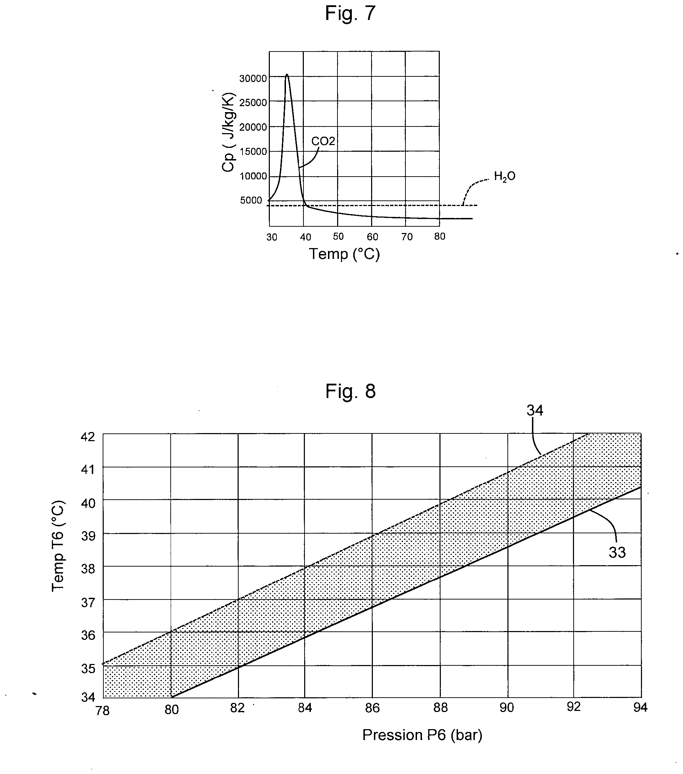

Selon une réalisation particulière, on pilote le compresseur principal 3 avec comme cible de points de température et de pression T6, P6 la courbe telle que T6 = 272 + P6 x 0,000004. La pression P6 est exprimée en pascals Cette courbe est illustrée sur la figure 8 par la référence **33,** avec la pression graduée en bar.

Par exemple pour 80 bar, cela donne 272 + 8000000 x 0,000004= 272 + *32 : 304°K soit environ 31°C.*

Le point bas **T6** sur la figure 5 reste au dessus du domaine sous-critique représenté par la région grisée notée **UC.**

À l'extrémité opposée du cycle, à l'entrée de la turbine, la pression est typiquement de l'ordre de 300 bar et la température **T1** du fluide est typiquement comprise entre 600°C et 900°C comme déjà indiqué.

On remarque aussi que, dans la partie descendante du cycle, le gradient de température régnant à l'intérieur du premier échangeur régénérateur (T2-T3) est supérieur au gradient de température régnant à l'intérieur du deuxième échangeur régénérateur (T3-T4). Le gradient descendant est noté 'Regen down' à la figure 5 alors que le gradient montant est noté 'Regen up'.

En se retournant vers la figure 8, il faut remarquer que lorsque le point de fonctionnement s'éloigne de la courbe **33** en direction de la courbe **34,** on dégrade le rendement global tout en restant dans des critères acceptables. Ainsi, on peut considérer que la bande de points de fonctionnement situés entre la courbe/ligne **33** et la courbe/ligne **34** constitue une région acceptable du pilotage de la boucle fermée de CO₂ supercritique.

Dans ces conditions, on obtient la caractéristique avantageuse de la température **T4** prévalant à l'entrée de l'ensemble échangeur basse température **7** qui est au moins égale à 100°C, de préférence au voisinage de 105° C. Comme visible aux figures 1 à 3, la température du circuit d'eau au point **M8** en sortie du premier échangeur basse température **71** est voisine de la température **T4,** au pincement de l'échangeur près. Ceci est vrai également, mutatis mutandis, sur le cas mono-échangeur 7 de la figure 4. En pratique, la température de l'eau au point **M8** est voisine de la température **T4.**

Selon une réalisation générale, moyennant la prise en compte de certaines variations, on peut garantir à destination d'un équipement client que la température T4 à l'entrée de l'ensemble échangeur basse température est au moins égale à 90°C.

Le deuxième échangeur basse température **72** présente un delta de température à ses extrémités compris entre 10°C et 15°C (entre une entrée et une sortie du même fluide), de préférence au moins 3 fois plus petit que le delta de température aux extrémités du premier échangeur basse température **71.**

Selon une réalisation typique, la température **T4** du fluide de travail CO₂ à son entrée dans le premier échangeur basse température **71** est de l'ordre de **105°C.** La température du fluide de travail CO₂ à sa sortie du premier échangeur basse température (et à son entrée dans le deuxième échangeur basse température **72**) est de l'ordre de **45°C.** La température du fluide de travail CO₂ à sa sortie du deuxième échangeur basse température est de l'ordre de **35°C.**

L'eau du circuit d'eau CFO qui circule à contre-courant dans les mêmes échangeurs, suit des valeurs voisines, au pincement thermique des échangeurs près.

On remarque en se tournant vers la figure 7, que la capacité calorifique du dioxyde de carbone présente une particularité notable entre les températures de 30°C et 40°C. La capacité calorifique du CO₂ supercritique est dans cet intervalle de température beaucoup plus élevé que celle de l'eau.

Les caractéristiques des deux échangeurs basse température en série 71,72 sont astucieusement adaptés pour tenir compte de cette particularité de la capacité calorique du CO₂ supercritique beaucoup plus élevé dans l'intervalle de température considérée.

Il est prévu d'équilibrer en moyenne sur le deuxième échangeur basse température les valeurs de flux calorique : F72CO₂ * Cp (CO₂) et F7H₂O * Cp (H₂O).

Dans l'expression précédente, nous avons :
F72CO₂ : flux de fluide de travail CO₂ qui passe dans le deuxième échangeur basse température,
F7H₂O : flux d'eau du circuit d'eau qui passe dans le deuxième échangeur basse température,
Cp (CO₂) : la capacité calorifique moyenne du CO₂ entre 35°C et 40°C,
Cp (H₂O) : la capacité calorifique moyenne de l'eau entre 30°C et 50°C (la courbe est plate aussi au-delà de ces valeurs, cf figure 7).

On maximise ainsi l'efficacité du deuxième échangeur basse température 72.

L'installation énergétique comprend en outre un circuit d'eau **CFO** couplé à l'ensemble échangeur basse température **7,** avec un premier échangeur auxiliaire **8** de délivrance d'énergie thermique **QL** à une température comprise entre 80°C et 100°C.

Le circuit d'eau **CFO** comprend une pompe de circulation **83.** Le point le plus chaud du circuit d'eau **CFO** est le point **M8.**

Le circuit d'eau **CFO** comprend un ou plusieurs refroidisseurs terminaux notés **18.** Les refroidisseurs terminaux **18** forment une sécurité de refroidissement de l'installation, notamment en cas d'interruption soudaine de prélèvement les équipements clients. On note **Qz** la puissance thermique évacuée sur les refroidisseurs terminaux notés **18.**

Il est prévu de piloter une vanne 3 voies **V32** en fonction du besoin client en QL, le restant du circuit d'eau étant refroidi par les refroidisseurs terminaux.

Avantageusement, il est prévu une branche de bypass **90,** qui permet à une portion du flux de fluide de travail de bypasser la turbine. On peut ainsi avantageusement piloter la vitesse de rotation de l'arbre qui entraîne la ou les génératrice(s) électrique(s), pour la régulation en fréquence et en tension. Il est prévu une vanne de bypass notée **V30** pour piloter le débit de fluide de travail qui passe dans la turbine et le débit de fluide de travail qui bypass la turbine.

Pour permettre une livraison de chaleur en moyenne température, le dispositif peut comprendre en outre un premier échangeur de dérivation **12** agencé en parallèle d'au moins un des échangeurs régénérateurs.

L'installation peut comprendre en outre un circuit d'huile **CFH** couplé au premier échangeur de dérivation **12,** et un deuxième échangeur auxiliaire **13** de délivrance d'énergie thermique QM à une température comprise entre 125°C et 400°C. Moyennant l'utilisation d'une vanne 3 voies notée **V33,** il est possible de piloter/doser le débit du fluide de travail qui passe dans le premier échangeur de dérivation **12.**

Pour permettre une livraison de chaleur en haute température, le dispositif peut comprendre en outre un deuxième échangeur de dérivation **19** agencé en parallèle de la turbine. Moyennant l'utilisation d'une autre vanne 3 voies notée **V34,** il est possible de piloter/doser le débit du fluide de travail qui passe dans ce deuxième échangeur de dérivation **19.**

Concernant le rendement global, en reprenant les notations déjà introduites plus haut, et en référence à la figure 6, le rendement global **RG** peut être déterminé comme suit : **RG** = **(Welec + QL + QM + QH) / Qa.**

Grâce à la solution de cogénération proposée ici on obtient généralement un rendement **RG** supérieur à 95%, voire supérieur à 97%.

Pour finir, il peut être prévu un échangeur supplémentaire **14,** représenté à la figure 1. Cet échangeur supplémentaire **14** est agencé sur le circuit d'huile CFH et il permet de délivrer des calories pour augmenter la température du circuit de livraison de basse température. Comme illustré à la figure 1, le flux thermique **QL** sortant du premier échangeur auxiliaire **8** est dirigé vers l'échangeur supplémentaire **14,** et le flux thermique résultant en sortie noté **QL'** est plus important. Le débit de fluide impliqué peut être piloté.

Il faut bien comprendre que l'échangeur de source chaude **1** peut être alimenté en flux thermique depuis une installation autre qu'un réacteur nucléaire comme illustré à la figure 6. En lieu et place du réacteur nucléaire, il peut s'agir d'une centrale à charbon, plus généralement à combustibles fossiles.

## Revendications

1. Dispositif cogénérateur (100) pour convertir une énergie thermique source en électricité et en chaleur, le dispositif comprenant :
- un circuit en boucle fermée de fluide de travail à base de dioxyde de carbone,
- le système comprenant un échangeur de source chaude (1), une turbine (2), un compresseur principal (3), un compresseur auxiliaire (4) appelé recompresseur (4), un premier échangeur régénérateur (5), un deuxième échangeur régénérateur (6), et un ensemble échangeur basse température (7,71,72) couplé thermiquement à un circuit d'eau,
- le circuit en boucle fermée (CFCO₂) comprenant une portion descendante, une portion montante, et une branche de dérivation (BD),
- la portion descendante partant de l'échangeur de source chaude (1) et passant successivement par la turbine (2), le premier échangeur régénérateur (5), le deuxième échangeur régénérateur (6), puis par l'ensemble échangeur basse température (7),
- la portion montante passant par le compresseur principal et passant successivement dans le deuxième échangeur régénérateur (6), le premier échangeur régénérateur (5), et entrant dans l'échangeur de source chaude (1),
- la branche de dérivation (BD) partant de l'entrée du recompresseur et rejoignant ensuite un point intermédiaire de la portion montante entre le deuxième et le premier échangeur régénérateur,
**caractérisé en ce que** le circuit en boucle fermée de fluide de travail se trouve dans des conditions supercritiques du dioxyde de carbone, partout sur l'ensemble du circuit en boucle fermée,
et la température (T4) prévalant à l'entrée de l'ensemble échangeur basse température (7) est au moins égale à 90°C.

2. Dispositif cogénérateur selon la revendication 1, dans lequel la température (T4) prévalant à l'entrée de l'ensemble échangeur basse température (7) est au moins égale à 100°C, de préférence voisine de 105°C.

3. Dispositif cogénérateur selon l'une des revendications 1 à 2, dans lequel la pression en entrée du compresseur principal est comprise entre 78 bar et 84 bar, et dans lequel la température prévalant à l'entrée du compresseur est comprise entre 32 °C et 42°C.

4. Dispositif cogénérateur selon l'une des revendications 1 à 3, dans lequel l'échangeur basse température (7) est formé par un premier échangeur basse température (71) et un deuxième échangeur basse température (72) agencés en série, la branche de dérivation étant configurée pour prélever du fluide de travail en aval du premier et en amont du deuxième pour diriger ce flux vers le recompresseur (4).

5. Dispositif cogénérateur selon la revendication 4, dans lequel le flux de fluide de travail F72CO₂ passant dans le deuxième échangeur basse température (72) est apte à équilibrer en moyenne sur le deuxième échangeur basse température
les valeurs : F72CO₂ * Cp (CO₂) et F7H₂O * Cp (H₂O), où
F72CO₂ est flux de fluide de travail qui passe dans le deuxième échangeur basse température,
F7H₂O est flux d'eau du circuit d'eau qui passe dans le deuxième échangeur basse température,
Cp (CO₂) est la capacité calorifique moyenne du CO₂ entre 35°C et 40°C,
Cp (H₂O) est la capacité calorifique moyenne de l'eau entre 30°C et 50°C.

6. Dispositif cogénérateur selon l'une des revendications 1 à 5, comprenant en outre un premier échangeur de dérivation (12) agencé en parallèle d'au moins un des échangeurs régénérateurs.

7. Dispositif cogénérateur selon l'une des revendications 1 à 6, comprenant en outre un deuxième échangeur de dérivation (19) agencé en parallèle de la turbine ou sur une branche de prélèvement en aval de la turbine.

8. Dispositif cogénérateur selon l'une des revendications 1 à 7, comprenant en outre au moins une génératrice électrique (G).

9. Dispositif cogénérateur selon l'une des revendications 1 à 8, dans lequel la turbine, le compresseur principal et le recompresseur sont montés à rotation sur un arbre commun (SH), et tournent à la même vitesse de rotation.

10. **Installation énergétique** comprenant un dispositif cogénérateur (100) selon l'une des revendications 1 à 9, et comprenant en outre un circuit d'eau (CFO) couplé à l'ensemble échangeur basse température (7), et comprenant un premier échangeur auxiliaire (8) de délivrance d'énergie thermique (QL) à une température comprise entre 80°C et 100°C.

11. Installation énergétique selon la revendication 10, dans laquelle le circuit d'eau (CFO) comprend un ou plusieurs refroidisseurs terminaux (18).

12. Installation énergétique selon la revendication 10 et 6, comprenant en outre un circuit d'huile (CFH) couplé au premier échangeur de dérivation (12), et comprenant un deuxième échangeur auxiliaire (13) de délivrance d'énergie thermique (QM) à une température comprise entre 125°C et 400°C.

13. Installation énergétique selon l'une des revendications 10 à 12, comprenant un réacteur nucléaire (120) délivrant un flux thermique sur l'échangeur de source chaude (1).

14. **Procédé** pour piloter une installation énergétique selon l'une des revendications 10 à 13, apte à délivrer des flux caloriques à basse, moyenne et optionnellement haute température à un ou plusieurs équipements clients, **caractérisé en ce que** les conditions de pression et température en entrée du compresseur principal sont pilotées, grâce au moins à un pilotage des vannes de calage dans le compresseur et optionnellement le recompresseur, de manière que la pression en entrée du compresseur principal est comprise entre 78 bars et 82 bars, et que la température prévalant à l'entrée du compresseur est comprise entre 32 °C et 42°C.

15. Procédé selon la revendication 14, dans lequel on pilote le compresseur principal (3) avec comme cible de points de température et de pression T6, P6 la courbe telle que T6 = 272 + P6 x 0,000004.
